# FASCICULE DE BREVET EUROPEEN

(11) **EP 1 210 751 B1**
(45) Date de publication et mention de la délivrance du brevet: **15.08.2012**
(21) Numéro de dépôt: 01949563.9
(22) Date de dépôt: 28.06.2001
(51) Int. Cl.: H01S 3/067

(54) **FIBRE OPTIQUE A POMPAGE PAR LA GAINE ET PROCEDE DE FABRICATION D'UNE TELLE FIBRE**
MANTELGEPUMPTE OPTISCHE FASER UND ZUGEHÖRIGES HERSTELLUNGSVERFAHREN
CLADDING-PUMPED OPTICAL FIBRE AND METHOD FOR MAKING SAME

(30) Priorité: 06.07.2000 FR 0008796
(43) Date de publication de la demande: 05.06.2002
(73) Titulaire: Alcatel Lucent, 75007 Paris (FR)
(72) Inventeur: TARDY, André, 91520 Egly (FR); GASCA, Laurent, F-91140 Villevon sur Yvette (FR)
(74) Mandataire: Sciaux, Edmond
(86) Numéro de dépôt international: PCT/FR2001/002062
(87) Numéro de publication internationale: WO 2002/003510

(56) Documents cités:
- EP-A- 0 695 003
- US-A- 5 533 163
- US-A- 5 712 941
- US-A- 5 873 923
- US-A- 5 949 941
- MUENDEL M H: "OPTIMAL INNER CLADDING SHAPES FOR DOUBLECLAD FIBER LASERS" CLEO '96. CONFERENCE ON LASERS AND ELECTRO-OPTICS. ANAHEIM, JUNE 2 - 7, 1996, CONFERENCE ON LASERS AND ELECTRO-OPTICS. (CLEO), NEW YORK, IEEE, US, 1996, page 209 XP000861756 ISBN: 0-7803-3183-4

## Description

La présente invention concerne une fibre optique à pompage par la gaine et un procédé de fabrication d'une telle fibre.

Les fibres optiques à pompage par la gaine comportent une structure particulière qui leur permet d'accepter davantage de puissance optique de pompe et ainsi d'augmenter l'amplification du signal optique que est obtenue par absorption d'énergie.

L'énergie d'amplification est fournie par un laser à haute puissante couplée dans une gaine de la fibre optique entourant son coeur, l'énergie lumineuse ainsi fournie à la gaine étant absorbée par le coeur dès lors que les rayons lumineux se propageant dans la gaine traversent l'interface entre le coeur et la gaine.

On comprend que l'efficacité du pompage d'énergie est essentiellement conditionnée par l'efficacité du couplage entre le coeur et la gaine.

Une des difficultés qui se posent avec les interfaces coeur/gaine cylindriques est que certains rayons lumineux véhiculés par la gaine suivent une trajectoire en hélice autour du coeur sans jamais rencontrer l'interface.

L'énergie portée par ces rayons est donc injectée en vain dans la gaine, car elle n'est jamais utilisée pour amplifier le signal transporté par le coeur.

Pour tenter de résoudre ce problème, il a déjà été proposé, notamment dans US-A-5 966 491, de former des rainures longitudinales dans la surface externe de la gaine, afin de briser les trajectoires en hélice des rayons lumineux et forcer ces derniers à rencontrer l'interface coeur/gaine.

Une autre solution, proposée dans WO 99/30 391 consiste à insérer des tiges dans des passages longitudinaux formés dans la gaine, afin d'obtenir des protubérances radiales à la surface de la gaine et perturber ainsi la trajectoire des rayons lumineux dans la gaine.

Le document US-5,949,9,41 et le document US-5,533,163 décrivent une fibre optique à pompage par la gaine comprenant un coeur d'indice optique n1, une première gaine d'indice n2 inférieur à n1, et une seconde gaine d'indice n3 inférieur à n2, L'interface entre les première et seconde gaines présentant une section transversale de forme polygonale.

La présente invention vise à proposer une fibre optique d'une structure nouvelle reposant sur le même principe de perturbation des rayons lumineux dans la gaine.

La fibre optique à pompage par la gaine fabriquée par le procédé de l'invention comprend :
- un coeur d'indice optique n1,
- autour du coeur, une première gaine d'indice n2 inférieur à n 1,
- autour de la première gaine, une seconde gaine d'indice n3 inférieur à n2. l'interface entre les première et seconde gaines présentant, en section transversale, une forme sensiblement polygonale, et
- autour de la seconde gaine, un revêtement polymère (20) à bas indice, l'interface entre la seconde gaine et le revêtement polymère présentant, en section transversale, une forme sensiblement multilobée.

On comprend que grâce à la forme polygonale de la section transversale de l'interface, tout rayon lumineux véhiculé par la gaine qui durait tendance à tourner autour du coeur en hélice sans jamais rencontrer l'interface coeur/gaine est perturbé par l'interface entre les première et seconde gaines et ne peut conserver sa trajectoire en hélice.

Par conséquent, une importante quantité de rayons lumineux, qui seraient perdus dans une structure a section circulaire, est récupérée grâce à l'invention;

Dans un mode de réalisation particutier de l'invention, le coeur est constitué par du verre de silice dopé, la première gaine est constituée par du verre de silice non dopé ou très faiblement dopé et la seconde gaine est constituée par du verre de silice dopé négativement, par exemple avec du fluor ou du bore.

Dans un autre mode de réalisation, le coeur est constitué par du verre de silice fortement dopé, la première gaine est constituée par du verre de silice dopé positivement, par exemple avec du germanium, et la seconde gaine est constituée par du verre de silice non dopé.

Dans l'un ou l'autre de ces deux modes de réalisation, le coeur présente l'indice n1 maximal, la première gaine présente l'indice n2 inférieur à n1 et la seconde gaine présente l'indice n3 inférieur à n2.

Dans un mode de réalisation particulier, la fibre comporte un revêtement polymère à bas indice autour de sa seconde gaine et l'interface entre la seconde gaine et ce revêtement présente, en section transversale, une forme sensiblement polygonale ou multilobée.

Dans ce cas, on réalise une seconde structure de pompage autour de la première structuré de pompage constituée par le coeur et la première gaine.

Cette seconde structure de pompage comprend la première gaine et la seconde gaine. L'interface entre la seconde gaine et te revêtement remplit la même fonction que précédemment décrit pour l'interface entre les première et seconde gaines, à savoir que tes rayons lumineux circulant dans la seconde gaine sont empêchés de tourner en hélice à l'intérieur de la seconde gaine sans jamais rencontrer l'interface entre la première et la seconde gaine, grâce à la forme sensiblement polygonale ou multilobée de l'interface entre la seconde gaine et le revêtement.

De cette manière, on peut utiliser des lasers de puissance émettant sur des diamètres plus emportants, et l'énergie injectée par le laser, tant dans la première gaine que dans la seconde gaine, sert à l'amplification du signal véhiculé par le coeur.

La présente invention a pour objet un procédé de fabrication économique d'une fibre optique telle que décrite ci-dessus, qui présente l'avantage de ne pas impliquer d'usinage mécanique coûteux.

Ce procède est caractérisé en ce qu'il consiste à exécuter les étapes suivantes :
positionnement, autour d'une préforme optique centrale comprenant un coeur d'indice n1 entouré d'une première gaine d'indice n2 inférieur à n1, de plusieurs barreaux d'indice n3 inférieur à n2,
-étirage de la préforme optique et des barreaux, jusqu'au fibrage et obtention d'une fibre optique comprenant un coeur et deux gainés.

Dans le procédé selon l'invention, ce sont les barreaux positionnés autour de la préforme optique centrale qui, sous l'effet de l'étirage, se compriment autour de la préforme optique et aboutissent à la forme polygonale revendiquée. Cette forme polygonale résulte d'un équilibrage des forces centripètes et de la déformation plastique de la préforme optique centrale et des barreaux.

Dans un mode de mise en oeuvre particulier, on utilise des préformes optiques à gaines d'indice n3 comme barreaux à positionner autour de la préforme optique centrale.

Un avantage de ce mode de mise en oeuvre est que l'approvisionnement en préformes optiques s'avère quelquefois plus simple que l'approvisionnement en barreaux homogènes constitués par exemple par du verre de silice dopé.

Dans ce cas, le coeur- des préformes utilisées comme barreaux ne joue pas son rôle habituel de coeur.

Dans un autre mode de mise en oeuvre de l'invention, on utilise comme préforme optique centrale une préforme qui, si elle était étirée dans les conditions habituelles, deviendrait une fibre optique à pompage par la gaine constituée par un coeur, une première gaine et une seconde gaine, le tout ayant une structuré de section circulaire, donc susceptible de laisser inutilisés un certain nombre de rayons lumineux circulant en hélice dans la première gaine.

Dans ce mode de mise en oeuvre, le procédé se caractérise en ce que la préforme optique centrale est, après étirage, une fibre optique à pompage par la gaine constituée par un coeur d'indice n1, une première gaine cylindrique à section circulaire d'indice n2 inférieur à n1 et entourant le coeur et une seconde gaine cylindrique à section circulaire d'indice n3 entourant la première gaine.

Toutefois, grâce à la présence, selon l'invention, des barreaux d'indice n3 autour de la préforme optique centrale, l'étirage de ladite préforme optique centrale et desdits barreaux aboutit à une modification de la section de l'interface entre les première et deuxième gaines, cette section perdant sa symétrie circulaire au profit d'une forme polygonale du fait de l'équilibrage des forces centripètes exercées par les barreaux.

Si les barreaux sont constitués par la même matière que la seconde gaine de la préforme optique centrale, la fusion qui se produit entre la seconde gaine et lesdits tubes aboutit à la formation d'une seconde gaine unique.

Dans un mode de mise en oeuvre particulier, on place la préforme optique centrale et les barreaux d'indice n3 dans un manchon à l'intérieur duquel l'atmosphère est contrôlée pour l'étirage, par mise sous vide ou sous pression partielle de gaz neutres tels que l'hélium ou réactifs tels que le C₂F₆.

De manière, avantageuse, le manchon est constitué par de la silice, dont l'indice a été abaissé par un dosage approprié, par exemple au fluor ou au bore.

Ce procédé, bien connu pour l'étirage de fibres optiques, s'applique sans difficulté aux fibres optiques selon la présente invention.

Selon un autre mode de mise en oeuvre de l'invention, on contrôle l'atmosphère d'étirage sans recourir à aucun manchon. En revanche, on colmate les interstices entre les barreaux d'indice n3 et on contrôle l'atmosphère dans le volume délimité par les barreaux, par mise sous vide ou sous pression partielle de gaz neutres tels que l'hélium ou réactifs tels que le C₂F₆.

Dans un mode de mise en oeuvre particulier, on enveloppe la seconde gaine dans un revêtement polymère à bas indice.

La présence du revêtement polymère conduit à l'obtention d'une troisième gaine d'indice n4 inférieur à n3 qui sert à canaliser les rayons lumineux dans la deuxième gaine, afin de réaliser une deuxième structure de pompage entre la troisième et la deuxième gaine.

Afin de faciliter la compréhension de l'invention, quelques exemples non limitatifs vont maintenant en être décrits, à l'aide des dessins annexés dans lesquels :
- la figure 1 est une section transversale d'un assemblage destiné à former une structure de pompage selon l'invention,
- la figure 2 est une section analogue à la figure 1 de l'assemblage après étirage sous vide,
- la figure 3 est une section transversale d'un assemblage destiné à former une autre structure de pompage selon l'invention,
- la figure 4 est une section analogue à la figure 3 de l'assemblage après étirage sous vidé,
- la figure 5 est une section transversale d'un assemblage destiné à former une double structure de pompage selon l'invention,
- la figure 6 est une section analogue à la figure 5, représentant l'assemblage après étirage.

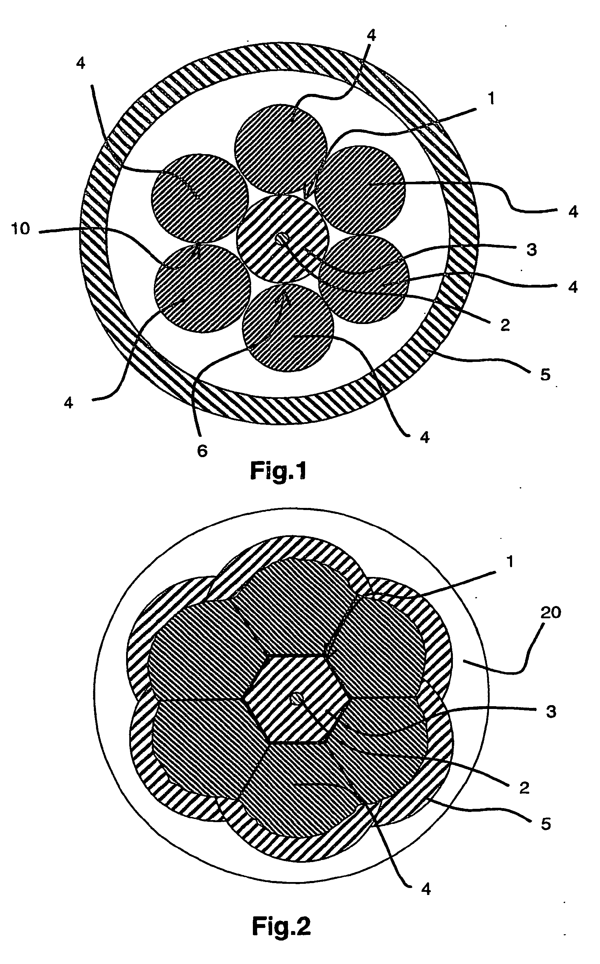

Sur la figure 1, on voit une préforme optique 1 comprenant un coeur monomode 2 dopé avec des terres rares appropriées pour le pompage, comme cela est bien connu de l'homme du métier. Ce coeur a un premier indice de réfraction n1 élevé.

Une première gaine 3 entoure le coeur 2. Cette gaine 3 est constituée par du verre de silice non dopé d'indice de réfraction n2 inférieur à celui n1 du coeur.

Un ensemble formé de six barreaux cylindriques 4 en verre à bas indice de réfraction, c'est-à-dire dopé négativement, afin que cet indice de réfraction n3 soit inférieur à l'indice de réfraction n2 de la première gaine, est maintenu en position et introduit dans un manchon 5 qui peut être formé par le même matériau que les barreaux cylindriques 4.

L'ensemble est introduit dans un four d'étirage (non représenté) avec mise sous vide de l'intérieur du manchon 5.

On contrôle le fluage des barreaux et de la préforme en agissant sur la tension et la vitesse de l'étirage.

Les six barreaux cylindriques 4 exercent chacun une force centripète sur la préforme centrale 1 et l'équilibrage de ces forces conduit la préforme centrale à s'écraser en chacun de ses six points 6 de contact avec les barreaux cylindriques 4.

Chaque barreau cylindrique 4 a également tendance à s'écraser à son point de contact avec la préforme, de sorte qu'un plan de contact se forme entre la préforme 1 et chaque barreau cylindrique 4.

Il en résulte que l'interface entre la préforme et l'ensemble des six barreaux cylindriques prend une configuration sensiblement hexagonale, comme on le voit à la figure 2.

Cette forme polygonale est conservée dans l'opération d'étirage qui transforme la préforme rétreinte en une fibre de dimension extérieure appropriée

La fibre est ensuite enfermée dans un revêtement polymère 20 qui assure sa protection.

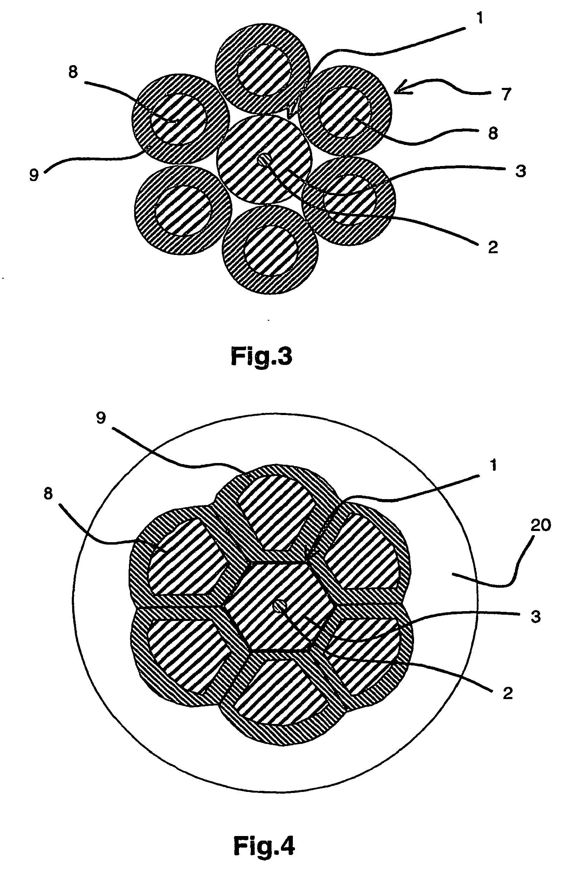

Dans l'exemple des figures 3 et 4, les barreaux cylindriques sont remplacés par des préformes composites 7, telles que celles commercialisées sous l'appellation Fluosil de la société Heraeus, qui sont constituées par un coeur en silice 8 et une première gaine en fluorosilicate 9.

Comme précédemment décrit, l'ensemble peut être introduit dans un manchon, puis passé dans un four d'étirage.

Toutefois, dans l'exemple des figures 3 et 4, aucun manchon n'a été utilisé. Les interstices entre les génératrices 10 par lesquelles les préformes composites périphériques 7 se trouvent en contact deux à deux ont été colmatés de manière que lesdites préformes délimitent un espace fermé entourant la préforme centrale 1, espace fermé à l'intérieur duquel le vide peut être fait, comme dans un manchon.

L'étirage sous vide dans un four (non représenté) fournit la structure représentée à la figure 4, sur laquelle on voit que la première gaine en fluorosilicate 9 de chaque barreau cylindrique 7 sert de troisième gaine d'indice n3, inférieur à l'indice n2, pour la préforme centrale 1 qui est ainsi entourée d'une première gaine 3 d'indice n2 et d'une seconde gaine 9 d'indice n3

Conformément à l'invention, l'interface entre les première et deuxième gaines présente une section hexagonale.

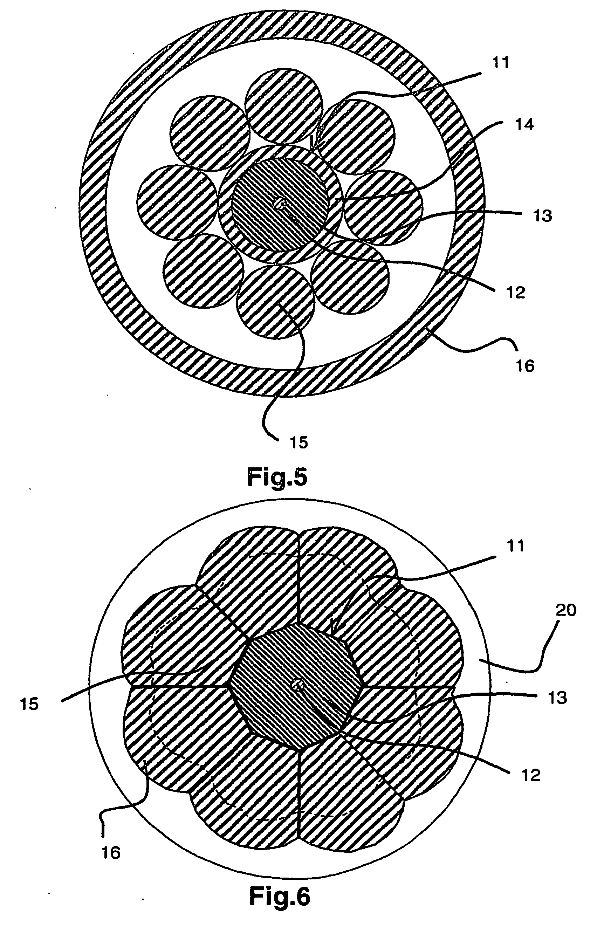

Dans le mode de réalisation des figures 5 et 6, la préforme centrale précédemment décrite comprenant un coeur et une première gaine a été remplacée par une préforme centrale 11 comprenant un coeur 12, une première gaine 13 et une seconde gaine 14.

Une telle préforme centrale 11 est traditionnellement utilisée pour obtenir une structure de pompage à symétrie circulaire.

Huit barreaux cylindriques 15 en verre de silice sont placés à la périphérie de la préforme centrale, l'ensemble étant introduit dans un manchon 16 également en verre de silice.

Le vide ayant été fait dans le manchon, la préforme 11 et les barreaux cylindriques 15 sont étirés dans un four d'étirage (non représenté).

Le fluage des barreaux cylindriques 15 d'une part, de la deuxième gaine 14 de la préforme centrale, d'autre part, aboutit à la formation d'une interface de section octogonale entre la première gaine 13 et la deuxième gaine 14, laquelle deuxième gaine résulte de la fusion entre la deuxième gaine 14 initiale de la préforme et les barreaux cylindriques 15.

En pratique, la deuxième gaine 14 initiale de la préforme est le tube de substrat sur lequel on a déposé par la technique MCVD les couches de verre de silice dopé constituant les structures de guidage de la fibre.

On voit, dans cet exemple, qu'il n'est pas nécessairement indispensable d'éliminer totalement le tube substrat, par exemple par évaporation, pour mettre en oeuvre l'invention, le fluage du verre de silice pouvant être obtenu même s'il subsiste une épaisseur du tube substrat autour de la première gaine de la préforme.

Les exemples qui viennent d'être décrits ne sont évidemment pas limitatifs de la portée de l'invention, toute modification pouvant leur être apportée dans le cadre défini par les revendications annexées.

En particulier, bien que seul l'étirage sous vide ait été décrit, il est clair que tout étirage sous atmosphère contrôlée, par exemple sous hélium ou sous C₂F₆ conviendrait pour la mise en oeuvre de l'invention.

## Revendications

1. Procédé de fabrication d'une fibre optique a pompage par la gaine, consistant à exécuter les étapes suivantes :
positionnement, autour d'une préforme optique centrale (1, 11) comprenant un coeur (2, 12) d'indice n1 entouré d'une première gaine (3, 13) d'indice n2 inférieur à n1, de plusieurs barreaux (4, 9, 15) d'indice n3 inférieur à n2,
- étirage de la préforme optique et des barreaux, jusqu'à fibrage et obtention d'une fibre optique comprenant un coeur et deux gaines de façon que l'interface entre la première gaine (3, 13) et une seconde gaine (4, 9, 14) entourant la première gaine présente, en section transversale, une forme sensiblement polygonale.

2. Procédé selon la revendication 1, dans lequel on utilise des préformes optiques (7) à gaines d'indice n3 comme barreaux à positionner autour de la préforme optique centrale.

3. Procédé selon l'une quelconque des revendications 1 et 2, dans lequel la préforme optique centrale (11) est, après étirage, une fibre optique à pompage par la gaine constituée par un coeur d'indice n1, une première gaine cylindrique à section circulaire d'indice n2 inférieur à n1 et entourant le coeur et une seconde gaine cylindrique à section circulaire d'indice n3 entourant la première gaine.

4. Procédé selon l'une quelconque des revendications 1 à 3, dans lequel on place la préforme optique centrale et les barreaux d'indice n3 dans un manchon (5, 16) à l'intérieur duquel l'atmosphère est contrôlée pour l'étirage, par mise sous vide ou sous pression partielle de gaz neutres ou réactifs.

5. Procédé selon la revendication 4 dans lequel le manchon est constitué par de la silice; dont l'indice a été abaissé par un dopage approprié.

6. Procédé selon la revendication 5, dans lequel le dopage approprié est choisit parmi un dopage au fluor et un dopage au bore.

7. Procédé selon l'une quelconque des revendication 1 à 3, dans, lequel on colmate les interstices entre les barreaux (15) d'indice n3 et l'on contrôle l'atmosphère dans le volume délimité par les barreaux pour l'étirage, par mise sous vide ou sous pression partielle de gaz neutres ou réactifs.

8. Procédé selon l'une quelconque des revendications 1 à .7, dans lequel on enveloppe la seconde gaine dans un revêtement polymère à bas indice (20).

9. Fibre optique à pompage par la gaine fabriquée par le procédé selon l'une des revendications 1 à 7 comprenant
- un coeur (2, 12) d'indice optique n1,
- autour du coeur, une première gaine (3, 13) d'indice n2 inférieur à n1,
- autour de la première, gaine, une seconde gaine (4, 9, T4) d'indice n3 inferieur à n2, l'interface entre les première (3, 13) et seconde (4, 9, 14) gaines présentant, en section transversale, une forme sensiblement polygonales, et
- autour de la seconde gaine, un revêtement polymère (20) à bas indice, l'interface entre la seconde gaine et le revêtement polymère présentant, en section transversale, une forme sensiblement multilobée.

## Claims

1. A method of fabricating an optical fiber pumped through a cladding, consisting of executing the hollowing steps:
- placing, around a centrale optical preform (1,11) including a core (2, 12) having an index n1 surrounded by a first cladding (3, 13) having an index n2 lower than n1, a plurality of rods (4, 9, 15) having an index n3 lower than n2,
- drawing the optical preform and the rods until a fiber is formed, to obtain the optical fiber inducing a core and two claddings, so that the interface between the first cladding (3, 13) and a second cladding (4, 9, 14) surrounding the first cladding exhibits, in its transversal section, a substantially polygonal shape.

2. A method according to claim 1, wherein optical preforms (7) with cladding having an index n3 are used as the rods placed around the central optical preform.

3. A method according to anyone of claims 1 and 2, wherein the central optical preform (11) is, after drawing, an optical fiber pumped through a cladding consisting of a core having an index n1, a first cylindrical cladding of circular section having man index n2 lower than n1 and surrounding the core, and a second cylindrical cladding of circular section having an index n3 and surrounding the first cladding.

4. A method according to anyone of claims 1 to 3, wherein the central optical preform and the rods having an index n3 are placed in a sleeve (5, 16) within which an atmosphere is controlled for drawing by establishing a vacuum or partial pressure of neutral gases or reagent

5. A method according to claim 4, wherein the sleeve is made of silica, whose index has been reduced by appropriate doping.

6. A method according to claim 5, wherein the appropriate doping is chosen from among fluorine doping and boron doping.

7. A method according to anyone of claims 1 to 3, wherein the interstices between the rods (15) having an index n3 are filled and the atmosphere in the volume delimited by the rods is controlled for drawing by establishing a vacuum or a partial pressure of neutral gases or reagents.

8. A method according to anyone of claims 1 to 7, wherein the second cladding is enveloped in a low-index polymer coating (20).

9. An optical fiber pumped through a cladding manufactured by the method according to anyone of claims 1 to 7, comprising
- a core (2, 12) having an optical index n1,
- around the core, a first cladding (3, 13) having an index n2 lower than n1,
- around the first cladding, a second cladding (4, 9, 14) having an index n3 lower than n2, the interface between the first (3, 13) and second (4, 9, 14) claddings exhibiting, in its transversal section, a substantially polygonal shape, and
- aground the second cladding, a polymer coating (20) having a low index, the interface between the second cladding and the polymer coating exhibiting, in their transversal section, a substantially multilobed shave.

## Patentansprüche

1. Verfahren zur Herstellung einer mantelgepumpten optischen Faser, wobei das Verfahren das Durchführen der folgenden Schritte umfasst:
- Anordnen, rund um eine mittlere optische Vorform (1, 11), welche einen Kern (2, 12) mil einem Brechungsindex n1 aufweist, der von einem ersten Mantel (3, 13) mit einem Brechungsindex n2, welcher niedriger als n1 ist, umgeben ist, von mehreren Stäben (4, 9, 15) mit einem Brechungsindex n3, welcher niedriger als n2 ist,
- Ziehen der optischen Vorform und der Stäbe bis zur Zerfaserung und zum Erhalten einer optischen Faser mit einem Kern und zwei Mänteln, derart, dass die Schnittstelle zwischen dem ersten Mantel (3, 13) und einem zweiten Mantel (4, 9, 14), welcher den ersten Mantel umgibt, im Querschnitt eine im Wesentlichen polygonale Form aufweist.

2. Verfahren nach Anspruch 1, wobei man optische Vorformen (7) mit Mänteln mit einem Brechungsindex n3 als um die mittlere optische Vorform anzuordnende Stäbe verwendet.

3. Verfahren nach einem beliebigen der Ansprüche 1 und 2, wobei die mittlere optische Vorform (11) nach dem Ziehen eine mantelgepumpte optische Faser ist, bestehend aus einen Kern mit einem Brechungsindex n1, einem ersten zylinderförmigen Mantel mit kreisrundem Querschnitt mit einem Brechungsindex n2, der niedriger als n1 ist, welcher den Kern umgibt, und einem zweiten zylinderförmigen Mantel mit kreisrundem Querschnitt mit einem Brechungsindex n3, welcher den ersten Mantel umgibt.

4. Verfahren nach einem beliebigen der Ansprüche 1 bis 3, wobei man die mittlere optische Vorform und die Stäbe mit einem Brechungsindex n3 in eine Hülse (5, 16) einbringt, innerhalb welcher die Atmosphäre für das Ziehen geregelt wird, indem sie unter Vakuum oder mit neutralen oder reaktiven Gasen teilweise unter Druck gesetzt wird.

5. Verfahren nach Anspruch 4, wobei die Hülse aus Siliciumdioxid besteht, dessen Brechungsindex durch eine geeignete Dotierung gesenkt wurde.

6. Verfahren nach Anspruch 5, wobei die geeignete Dotierung ausgewählt wird unter einer Fluor-Dotierung und einer Bor-Dotierung.

7. Verfahren nach einem beliebigen der Ansprüche 1 bis 3, wobei man die Zwischenräume zwischen den Stäben (15) mit einem Brechungsindex n3 abdichtet und die Atmosphäre in dem von den Stäben abgegrenzten Volumen für das Ziehen regelt, indem es unter Vakuum oder mit neutralen oder reaktiven Gasen teilweise unter Druck gesetzt wird.

8. Verfahren nach einem beliebigen der Ansprüche 1 bis 7, wobei man den zweiten Mantel mit einem polymeren Überzug mit niedrigem Brechungsindex (20) umhüllt.

9. Mantelgepumpte optische Faser, gemäß einem der Ansprüche 1 bis 7 hergestellt und umfassend:
- Einen Kern (2,12) mit einem optischen Index n1,
- den Kern umgebend, einen ersten Mantel (3, 13) mit einem Brechungsindex n2, welcher niedriger als n1 ist,
- den ersten Mantel umgebend, einen zweiten Mantel (4, 9, 14) mit einem Brechungsindex n3, welcher niedriger als n2 ist, wobei die Schnittstelle zwischen dem ersten (3, 13) und dem zweiten Mantel (4, 9, 14) im Querschnitt eine im Wesentlichen polygonale Form aufweist, und
- den zweiten Mantel umgebend, einen polymere Überzug (20) mit niedrigem Brechungsindex, wobei die Schnittstelle zwischen dem zweiten Mantel und der polymere Überzug im Querschnitt eine im Wesentlichen eine mehrlappige Form aufweiset.
